# EUROPEAN PATENT APPLICATION

(11) **EP 3 412 638 A1**
(43) Date of publication of application: **12.12.2018**
(21) Application number: 17747592.8
(22) Date of filing: 03.02.2017
(51) Int. Cl.: C03C 27/12, B32B 7/02, B32B 27/18, B32B 27/22, B32B 27/30, B60J 1/00

(54) **INTERLAYER FOR LAMINATED GLASS, AND LAMINATED GLASS**

(30) Priority: 05.02.2016 JP 2016021338; 05.02.2016 JP 2016021339
(71) Applicant: Sekisui Chemical Co., Ltd., Osaka-shi, Osaka 530-8565 (JP)
(72) Inventor: NAKAJIMA, Daisuke, Kouka-shi Shiga 528-8585 (JP); YAMAGUCHI, Takahiro, Gamagori-shi Aichi 443-8623 (JP); SHOUHI, Hajime, Kouka-shi Shiga 528-8585 (JP)
(74) Representative: Ter Meer Steinmeister & Partner
(86) International application number: PCT/JP2017/004073
(87) International publication number: WO 2017/135441

(57) **Abstract**

There is provided an interlayer film for laminated glass having a planar heat-generating property and having a high heat-generating property and a high transparency. The interlayer film for laminated glass according to the present invention has a thermoplastic resin layer containing a thermoplastic resin and a conductive film being arranged on a first surface of the thermoplastic resin layer or two conductive films being respectively arranged on both of the first surface and a second surface opposite to the first surface, a surface at a side opposite to the thermoplastic resin layer side of the conductive film is a surface on which a lamination glass member is layered, the conductive film contains silver, gold, or platinum, the conductive film has a thickness of 100 nm or less, and the interlayer film is capable of planarly generating heat by being supplied with electricity.

## Description

### TECHNICAL FIELD

The present invention relates to an interlayer film for laminated glass which is used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings, and the like. The laminated glass is produced by sandwiching an interlayer film for laminated glass between a pair of glass plates.

When laminated glass is used under a low-temperature condition, freezing of moisture and dew condensation sometimes occur on the surface of laminated glass. When freezing of moisture and dew condensation occur, the visual field through the laminated glass becomes bad. It has been desired to suppress freezing of moisture and dew condensation in laminated glass and to remove a frozen object and dew condensation water.

In the following Patent Document 1, there has been proposed laminated glass with which a frozen object on the surface of the laminated glass can be thawed. The laminated glass described in Patent Document 1 has plural sheets of glass plates and an interlayer film and has a structure in which the glass plates and the interlayer film interposed therebetween are layered. The resultant thermal resistance of the plural sheets of glass plates and the interlayer film is 0.014 to 0.25 m²K/W.

### Related Art Document

### Patent Document

Patent Document 1: JP 2006-137648 A

### SUMMARY OF THE INVENTION

### PROBLEMS TO BE SOLVED BY THE INVENTION

In Patent Document 1, a technique for using a material with a high thermal resistance value in an interlayer film in order to attain a resultant thermal resistance falling within the above-mentioned range is described. However, with regard to laminated glass prepared with such an interlayer film described in Patent Document 1, a frozen object or dew condensation water sometimes fails to be sufficiently removed.

Moreover, in order to prevent freezing of moisture and dew condensation from occurring and to remove a frozen object or dew condensation water, a heating wire is sometimes arranged on the surface of an interlayer film or a glass plate in laminated glass. However, when a heating wire is arranged, the transparency of laminated glass is lowered.

Furthermore, when a heating wire is arranged, the appearance of laminated glass becomes poor and the visual field through the laminated glass becomes bad. Furthermore, laminated glass in which a heating wire is used fails to generate heat uniformly over the whole surface thereof. Even if a frozen object or dew condensation water is sufficiently removed in the vicinity of a heating wire, a frozen object or dew condensation water sometimes fails to be sufficiently removed at a position far from the heating wire. When a frozen object or dew condensation water is removed only in the vicinity of a heating wire, the visual field may also become worse. Moreover, when the number of heating wires is increased and wiring segments are highly densely arranged in order to sufficiently remove a frozen object or dew condensation water, the appearance of laminated glass becomes poorer and the visual field through the laminated glass becomes worse.

An object of the present invention is to provide an interlayer film for laminated glass having a planar heat-generating property and having a high heat-generating property and a high transparency. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass (hereinafter, sometimes described as "an interlayer film") having a thermoplastic resin layer containing a thermoplastic resin and a conductive film being arranged on a first surface of the thermoplastic resin layer or two conductive films being respectively arranged on both of the first surface and a second surface opposite to the first surface, a surface at a side opposite to the thermoplastic resin layer side of the conductive film being a surface on which a lamination glass member is layered, the conductive film containing silver, gold, or platinum, the conductive film having a thickness of 100 nm or less, and the interlayer film being capable of planarly generating heat by being supplied with electricity.

In a specific aspect of the interlayer film according to the present invention, when the interlayer film is sandwiched between two sheets of green glass with a thickness of 2 mm in accordance with JIS R3208 to obtain laminated glass, the visible light transmittance of the laminated glass is 40% or more.

In a specific aspect of the interlayer film according to the present invention, when the interlayer film is sandwiched between two sheets of green glass with a thickness of 2 mm in accordance with JIS R3208 to obtain laminated glass, the haze value of the laminated glass is 2.0% or less.

In a specific aspect of the interlayer film according to the present invention, the surface resistivity measured at a portion in which the conductive film is arranged is 15 Ω/□ or less.

It is preferred that the thermoplastic resin be a polyvinyl acetal resin. It is preferred that the thermoplastic resin layer contain a plasticizer. It is preferred that the thermoplastic resin layer contain an ultraviolet ray screening agent. It is preferred that the thermoplastic resin layer contain an alkali metal salt or an alkaline earth metal salt.

In a specific aspect of the interlayer film according to the present invention, the interlayer film is supplied with electricity to be used.

According to a broad aspect of the present invention, there is provided laminated glass including a first lamination glass member, a second lamination glass member, and the above-described interlayer film for laminated glass, the interlayer film for laminated glass being arranged between the first lamination glass member and the second lamination glass member.

In a specific aspect of the laminated glass according to the present invention, the laminated glass further includes an electricity supply unit for supplying the interlayer film for laminated glass with electricity.

According to a broad aspect of the present invention, there is provided laminated glass including a first lamination glass member, a second lamination glass member, an interlayer film for laminated glass, and an electricity supply unit for supplying the interlayer film for laminated glass with electricity, the interlayer film for laminated glass being arranged between the first lamination glass member and the second lamination glass member, the interlayer film for laminated glass having a thermoplastic resin layer containing a thermoplastic resin and a conductive film being arranged on a first surface of the thermoplastic resin layer or two conductive films being respectively arranged on both of the first surface and a second surface opposite to the first surface, the conductive film containing silver, gold, or platinum, the conductive film having a thickness of 100 nm or less, and the laminated glass being capable of planarly generating heat by supplying the interlayer film for laminated glass with electricity from the electricity supply unit.

In a specific aspect of the laminated glass according to the present invention, the visible light transmittance is 40% or more and more preferably 70% or more.

In a specific aspect of the laminated glass according to the present invention, the haze value is 2.0% or less.

### EFFECT OF THE INVENTION

The interlayer film for laminated glass according to the present invention has a thermoplastic resin layer containing a thermoplastic resin and a conductive film being arranged on a first surface of the thermoplastic resin layer or two conductive films being respectively arranged on both of the first surface and a second surface opposite to the first surface, a surface at a side opposite to the thermoplastic resin layer side of the conductive film is a surface on which a lamination glass member is layered, the conductive film contains silver, gold, or platinum, and the interlayer film is capable of planarly generating heat by being supplied with electricity. The interlayer film according to the present invention has a planar heat-generating property and has a high heat-generating property and a high transparency.

The laminated glass according to the present invention includes a first lamination glass member, a second lamination glass member, an interlayer film for laminated glass, and an electricity supply unit for supplying the interlayer film for laminated glass with electricity, the interlayer film for laminated glass is arranged between the first lamination glass member and the second lamination glass member, the interlayer film for laminated glass has a thermoplastic resin layer containing a thermoplastic resin and a conductive film being arranged on a first surface of the thermoplastic resin layer or two conductive films being respectively arranged on both of the first surface and a second surface opposite to the first surface, the conductive film contains silver, gold, or platinum, and the laminated glass is capable of planarly generating heat by supplying the interlayer film for laminated glass with electricity from the electricity supply unit. The laminated glass according to the present invention has a planar heat-generating property and has a high heat-generating property and a high transparency.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODE(S) FOR CARRYING OUT THE INVENTION

Hereinafter, the details of the present invention will be described.

The interlayer film for laminated glass according to the present invention has a thermoplastic resin layer and a conductive film. The thermoplastic resin layer contains a thermoplastic resin. The conductive film has a conductivity. With regard to the conductive film, a conductive film is arranged on a first surface of the thermoplastic resin layer or two conductive films are respectively arranged on both of the first surface and a second surface opposite to the first surface. The conductive film may be arranged only on a first surface (on a surface at one side) of the thermoplastic resin layer. The two conductive films may be respectively arranged on both of the first surface and a second surface opposite to the first surface (on surfaces at both sides of the thermoplastic resin layer). In the present invention, it is preferred that a surface at a side opposite to the thermoplastic resin layer side of the conductive film be a surface on which a lamination glass member is layered.

In the interlayer film according to the present invention, the conductive film contains silver, gold, or platinum.

The interlayer film according to the present invention is capable of planarly generating heat by being supplied with electricity. In the interlayer film, heat can be planarly generated instead of being linearly generated along a line.

Since the interlayer film according to the present invention is provided with the above-mentioned configuration, laminated glass can exert a planar heat-generating property. Under a low-temperature condition, freezing of moisture and dew condensation sometimes occur on laminated glass. By making the interlayer film planarly generate heat, a frozen object and dew condensation water can be uniformly thawed or removed.

Furthermore, since the interlayer film according to the present invention is provided with the above-mentioned configuration, the visibility through laminated glass can be enhanced.

In order to prevent freezing of moisture and dew condensation from occurring and to remove a frozen object or dew condensation water, a heating wire is sometimes arranged on the surface of an interlayer film or a glass plate in laminated glass. However, when a heating wire is arranged, the transparency of laminated glass is lowered.

Moreover, when a heating wire is arranged, the appearance of laminated glass becomes poor and the visual field through the laminated glass becomes bad. Furthermore, laminated glass in which a heating wire is used fails to generate heat uniformly over the whole surface thereof. Even if a frozen object or dew condensation water is sufficiently removed in the vicinity of a heating wire, a frozen object or dew condensation water sometimes fails to be sufficiently removed at a position far from the heating wire. When a frozen object or dew condensation water is removed only in the vicinity of a heating wire, the visual field may also become worse. Moreover, when the number of heating wires is increased and wiring segments are highly densely arranged in order to sufficiently remove a frozen object or dew condensation water, the appearance of laminated glass becomes poorer and the visual field through the laminated glass becomes worse.

In contrast, in the present invention, unlike the form of such a heating wire, since the conductive film has a film-like form, heat can be planarly generated. Furthermore, in the present invention, since the conductive film is a conductive film containing silver, gold, or platinum, the heat-generating property and the transparency can be enhanced. Furthermore, in the present invention, unlike the form of such a heating wire that causes a portion where the field of vision is obstructed and a portion where the field of vision is not obstructed to be formed and makes the visual field liable to vary with places, since the conductive film has a film-like form, the visibility through laminated glass can be enhanced.

The interlayer film has a planar heat-generating property. For example, when laminated glass at 25°C is applied with an output voltage of 12 V for 7 minutes, the surface temperature can be increased preferably by 40°C or more and more preferably by 60°C or more. It is preferred that the whole surface ranging from one end part of laminated glass to the other end part thereof be capable of generating heat uniformly. Moreover, it is preferred that the surface temperature at the center part of the laminated glass surface be capable of being increased by the lower limit or more.

Moreover, for example, it is preferred that whether the heat-generating property is planar or not be evaluated by the following method. To both ends of a sheet of laminated glass obtained by using the interlayer film for laminated glass according to the present invention and two sheets of green glass (10 cm in longitudinal length × 10 cm in transversal length × 2 mm in thickness) in accordance with JIS R3208, two single-sided copper foil tapes STS-CU42S (available from Sekisui Material Solutions Co., Ltd.) as electrodes are respectively bonded so as to be brought into contact with a conductive film. Next, by the use of a cable with alligator clips, a DC 12 V/4.2 A power source S8JX-N05012DC (available from OMRON Corporation) is connected to the electrode. Furthermore, the sheet of laminated glass being kept at 25°C is applied with an output voltage of 12 V for 7 minutes. With the use of a contact thermometer, the center part of the laminated glass surface is measured for the end-point temperature by heat generation (surface temperature) at the end of 7 minutes after the initiation of voltage application. Furthermore, a surface temperature difference between the vicinity of an end part (the position at an inner side by 1 cm from the end part) of laminated glass and the center part is measured. On this occasion, when the temperature difference between the vicinity of an end part and the center part is 4°C or less after the temperature is increased, it can be said that the sheet of laminated glass has a planar heat-generating property. In this connection, on this occasion, it is most preferred that a temperature difference in the surface temperature between the vicinity of an end part (the position at an inner side by 1 cm from the end part) of laminated glass and the center part be 4°C or less over the whole circumference of a sheet of laminated glass. Then, it is preferred that a temperature difference in the surface temperature between the vicinity of each of the four corners (four locations on the respective corner parts each of which is at a position apart by 1 cm from each of the four sides) of laminated glass and the center part be 4°C or less.

It is preferred that the thermoplastic resin layer have an adhesiveness. When the thermoplastic resin layer has an adhesiveness, the thermoplastic resin layer can be cut at a middle portion in the thickness direction to expose a cut surface, and a lamination glass member can be bonded to the exposed cut surface by virtue of the adhesiveness of the thermoplastic resin layer.

The interlayer film is sandwiched between two sheets of green glass with a thickness of 2 mm in accordance with JIS R3208 to obtain laminated glass. In this laminated glass, the visible light transmittance is preferably 40% or more and more preferably 70% or more. When the visible light transmittance satisfies the lower limit, the visibility is further enhanced.

The interlayer film is sandwiched between two sheets of green glass with a thickness of 2 mm in accordance with JIS R3208 to obtain laminated glass. In this laminated glass, the haze value is preferably 2.0% or less, more preferably 1.0% or less, and further preferably 0.5% or less. When the haze value satisfies the upper limit, the transparency is further enhanced.

The surface resistivity measured at a portion in which the conductive film is arranged is preferably 15 Ω/□ or less, more preferably 10 Ω/□ or less, further preferably 5 Ω/□ or less, especially preferably 3.1 Ω/□ or less, and most preferably 3.0 Ω/□ or less. When the surface resistivity is the upper limit or less, electricity becomes difficult to be localized in the vicinity of an end part and the like, and heat can be further uniformly generated. The surface resistivity measured at a portion in which the conductive film is arranged is preferably 0.1 Ω/□ or more, more preferably 1.5 Ω/□ or more, and further preferably 2 Ω/□ or more. When the surface resistivity is the lower limit or more, the formation of a conductive film is facilitated, and moreover, the heat generation temperature becomes further satisfactory.

The thermoplastic resin layer has a one-layer structure or a two or more-layer structure. The thermoplastic resin layer may have a one-layer structure and may have a two or more-layer structure. The thermoplastic resin layer may have a two-layer structure and may have a three or more-layer structure. The thermoplastic resin layer may be a single-layered portion provided with only a first layer and may be a multi-layered portion provided with a first layer and another layer.

Hereinafter, specific embodiments of the present invention will be described with reference to the drawings.

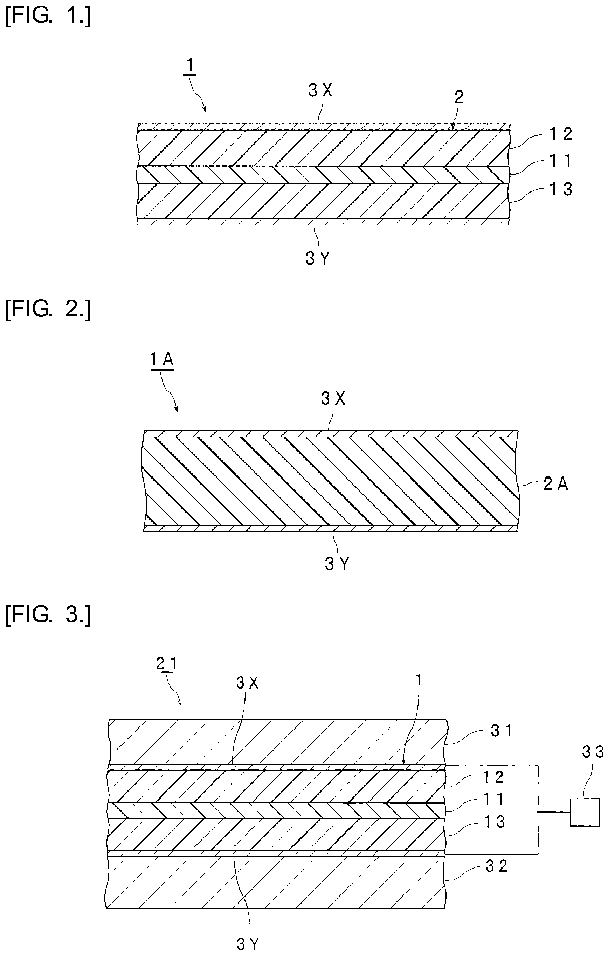

Fig. 1 is a sectional view schematically showing an interlayer film for laminated glass in accordance with a first embodiment of the present invention. In this connection, in Fig. 1 and a figure described below, for convenience of illustration, the size, thickness, and the like are different from actual dimensions.

The interlayer film 1 shown in Fig. 1 is provided with a multi-layered thermoplastic resin layer 2 having a two or more-layer structure, a conductive film 3X, and a conductive film 3Y. The interlayer film 1 is used for obtaining laminated glass. The interlayer film 1 is an interlayer film for laminated glass.

The thermoplastic resin layer 2 is provided with a first layer 11, a second layer 12, and a third layer 13. The second layer 12 is arranged on a first surface of the first layer 11 to be layered thereon. The third layer 13 is arranged on a second surface opposite to the first surface of the first layer 11 to be layered thereon. The first layer 11 is an intermediate layer. Each of the second layer 12 and the third layer 13 is a protective layer, and in the present embodiment, the second layer 12 and the third layer 13 are layers on which the conductive film 3X and the conductive film 3Y are respectively layered. The first layer 11 is arranged between the second layer 12 and the third layer 13 to be sandwiched therebetween. Accordingly, the thermoplastic resin layer 2 has a multilayer structure (a second layer 12/a first layer 11/a third layer 13) in which the second layer 12, the first layer 11, and the third layer 13 are layered in this order.

The conductive film 3X is arranged on a first surface of the thermoplastic resin layer 2. Hereinafter, a conductive film arranged on a first surface is sometimes referred to as a first conductive film. The conductive film 3Y is arranged on a second surface opposite to the first surface of the thermoplastic resin layer 2. Hereinafter, a conductive film arranged on a second surface opposite to the first surface is sometimes referred to as a second conductive film.

Fig. 2 is a sectional view schematically showing an interlayer film for laminated glass in accordance with a second embodiment of the present invention.

The interlayer film 1A shown in Fig. 2 is provided with a single-layered thermoplastic resin layer 2A (first layer) having a one-layer structure, a conductive film 3X, and a conductive film 3Y. The interlayer film 1A is used for obtaining laminated glass. The interlayer film 1A is an interlayer film for laminated glass.

The conductive film 3X is arranged on a first surface of the thermoplastic resin layer 2A. The conductive film 3Y is arranged on a second surface opposite to the first surface of the thermoplastic resin layer 2A.

In each of the interlayer film 1 and the interlayer film 1A, the conductive film 3X and the conductive film 3Y are respectively arranged on both of the first surface and the second surface of each of the thermoplastic resin layer 2 and the thermoplastic resin layer 2A. The conductive film may be arranged only on a first surface of the thermoplastic resin layer. The material of the conductive film 3X and the material of the conductive film 3Y may be the same as or different from each other. The thickness of the conductive film 3X and the thickness of the conductive film 3Y may be the same as or different from each other.

Hereinafter, the details of the thermoplastic resin layer (the first layer, the second layer, and the third layer) constituting the interlayer film according to the present invention and the details of the conductive film will be described.

Hereinafter, the details of materials constituting the interlayer film for laminated glass according to the present invention.

### (Thermoplastic resin)

A thermoplastic resin contained in the thermoplastic resin layer is not particularly limited. As the thermoplastic resin, a conventionally known thermoplastic resin can be used. One kind of the thermoplastic resin may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic resins other than these may be used.

The proper selection of the kind of a thermoplastic resin enables the thermoplastic resin layer to exert the adhesiveness. In general, a polyethylene terephthalate film and the like have no adhesiveness. Accordingly, it is preferred that the thermoplastic resin not be polyethylene terephthalate. Moreover, it is preferred that the thermoplastic resin not be a polyolefin resin. Moreover, the thermoplastic resin layer containing a polyvinyl acetal resin has an adhesiveness originating in a property of the polyvinyl acetal resin. The polyvinyl acetal resin has been known as a resin having an adhesiveness.

It is preferred that the thermoplastic resin be a polyvinyl acetal resin, and it is more preferred that the thermoplastic resin be a polyvinyl butyral resin. By using a polyvinyl acetal resin, the adhesive force of the interlayer film to a lamination glass member can be enhanced. By using a polyvinyl acetal resin and a plasticizer together, the adhesive force of the interlayer film to a lamination glass member is further enhanced.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more, and preferably 5000 or less, more preferably 4000 or less and further preferably 3500 or less. When the average polymerization degree is the lower limit or more, the penetration resistance of laminated glass is further enhanced. When the average polymerization degree is the upper limit or less, formation of an interlayer film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin fall within the range of 3 to 5, and it is preferred that the number of carbon atoms of the acetal group be 4 or 5.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Acetaldehyde, propionaldehyde, n-butyraldehyde, isobutyraldehyde, n-hexylaldehyde, or n-valeraldehyde is preferred, acetaldehyde, propionaldehyde, n-butyraldehyde, isobutyraldehyde, or n-valeraldehyde is more preferred, and n-butyraldehyde or n-valeraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the lower limit or more, the adhesive force of the interlayer film is further enhanced. Moreover, when the content of the hydroxyl group is the upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more, and preferably 30% by mole or less, more preferably 25% by mole or less, and further preferably 20% by mole or less. When the acetylation degree is the lower limit or more, the compatibility between the polyvinyl acetal resin and a plasticizer is enhanced. When the acetylation degree is the upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the lower limit or more, the compatibility between the polyvinyl acetal resin and a plasticizer is enhanced. When the acetalization degree is the upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

From the viewpoint of further enhancing the adhesive force of an interlayer film, it is preferred that the thermoplastic resin layer contain a plasticizer. When a thermoplastic resin contained in the thermoplastic resin layer is a polyvinyl acetal resin, it is especially preferred that the thermoplastic resin layer contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

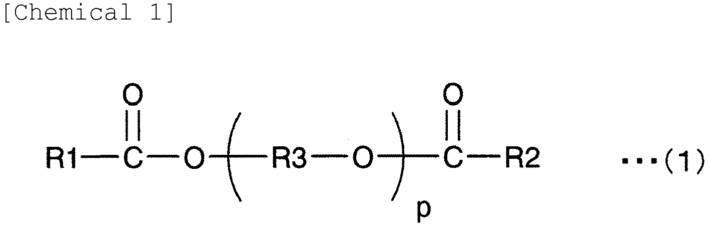

In the foregoing formula (1), R1 and R2 each represent an organic group with 2 to 10 carbon atoms, R3 represents an ethylene group, an isopropylene group, or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO) or triethylene glycol di-2-ethylbutyrate (3GH), and it is more preferred that the plasticizer include triethylene glycol di-2-ethylhexanoate. One kind of these preferred plasticizers may be used alone, and two or more kinds thereof may be used in combination.

When the thermoplastic resin layer contains a plasticizer, the content of a plasticizer in a layer containing a thermoplastic resin and the plasticizer is not particularly limited. In each of the thermoplastic resin layer and the layer containing a thermoplastic resin and a plasticizer, the content of the plasticizer is preferably 25 parts by weight or more and more preferably 30 parts by weight or more and is preferably 60 parts by weight or less and more preferably 50 parts by weight or less relative to 100 parts by weight of the thermoplastic resin. When the content of the plasticizer is the lower limit or more, the penetration resistance of laminated glass is further enhanced. When the content of the plasticizer is the upper limit or less, the transparency of the interlayer film is further enhanced.

### (Ultraviolet ray screening agent)

It is preferred that the thermoplastic resin layer contain an ultraviolet ray screening agent. By the use of the ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure, an ultraviolet ray screening agent having a benzophenone structure, an ultraviolet ray screening agent having a triazine structure, an ultraviolet ray screening agent having a malonic acid ester structure, an ultraviolet ray screening agent having an oxanilide structure, an ultraviolet ray screening agent having a benzoate structure, and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), and 2-(2'-hydroxy-3',5'-di-amylphenyl)benzotriazole ("Tinuvin 328" available from BASF Japan Ltd.). It is preferred that the ultraviolet ray screening agent be an ultraviolet ray screening agent having a benzotriazole structure containing a halogen atom and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

When the thermoplastic resin layer contains the ultraviolet ray screening agent, the content of an ultraviolet ray screening agent in a layer containing the ultraviolet ray screening agent is not particularly limited. From the viewpoint of further suppressing the lowering in visible light transmittance after the lapse of time, in 100% by weight of the thermoplastic resin layer and in 100% by weight of a layer containing the thermoplastic resin and the ultraviolet ray screening agent, the content of the ultraviolet ray screening agent is preferably 0.1% by weight or more, more preferably 0.2% by weight or more, further preferably 0.3% by weight or more, and especially preferably 0.5% by weight or more and is preferably 2.5% by weight or less, more preferably 2% by weight or less, further preferably 1% by weight or less, and especially preferably 0.8% by weight or less. In particular, by setting the content of the ultraviolet ray screening agent to be 0.2% by weight or more in 100% by weight of the thermoplastic resin layer and in 100% by weight of a layer containing the thermoplastic resin and the ultraviolet ray screening agent, with regard to the interlayer film and laminated glass, the lowering in visible light transmittance thereof after the lapse of time can be significantly suppressed.

### (Oxidation inhibitor)

It is preferred that the thermoplastic resin layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

When the thermoplastic resin layer contains the oxidation inhibitor, with regard to the interlayer film and laminated glass, in order to maintain high visible light transmittance thereof over a long period of time, it is preferred that the content of the oxidation inhibitor be 0.1% by weight or more in 100% by weight of the thermoplastic resin layer and in 100% by weight of a layer containing the thermoplastic resin and the oxidation inhibitor. Moreover, since an effect commensurate with the addition of an oxidation inhibitor is not attained, it is preferred that the content of the oxidation inhibitor be 2% by weight or less in 100% by weight of the thermoplastic resin layer and in 100% by weight of a layer containing the thermoplastic resin and the oxidation inhibitor.

With regard to the interlayer film and laminated glass, from the viewpoint of further heightening the heat shielding properties thereof, the visible light transmittance thereof, and the visible light transmittance thereof after the lapse of time, in 100% by weight of the thermoplastic resin layer and in 100% by weight of a layer containing the thermoplastic resin and the oxidation inhibitor, the content of the oxidation inhibitor is preferably 0.1% by weight or more. Moreover, in order to suppress a change in color of the peripheral part due to the influence of the oxidation inhibitor, in 100% by weight of the thermoplastic resin layer and in 100% by weight of a layer containing the thermoplastic resin and the oxidation inhibitor, the content of the oxidation inhibitor is preferably 2% by weight or less and more preferably 1.8% by weight or less.

### (Metal salt)

Since the thermoplastic resin layer can be made to exert moderate adhesiveness, it is preferred that the thermoplastic resin layer contain an alkali metal salt and an alkaline earth metal salt (hereinafter, these are sometimes combined and described as Metal salt M), and it is more preferred that the thermoplastic resin layer contain Mg and K. In this connection, in the present invention, Mg is also categorized as the alkaline earth metal salt. In this case, the thermoplastic resin layer may contain both of an alkali metal salt and an alkaline earth metal salt. By the use of the Metal salt M, controlling the adhesivity between a lamination glass member and the interlayer film and the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr, and Ba. It is preferred that a metal salt contained in a layer containing the metal salt contain at least one kind of metal between K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

When the thermoplastic resin layer contains the Metal salt M, each of the total of the contents of Mg and K in the thermoplastic resin layer and the total of the contents of Mg and K in a layer containing the thermoplastic resin and the Metal salt M is preferably 5 ppm or more, more preferably 10 ppm or more, and further preferably 20 ppm or more and is preferably 300 ppm or less, more preferably 250 ppm or less, and further preferably 200 ppm or less. When the total of the contents of Mg and K is the lower limit or more and the upper limit or less, the adhesivity between the interlayer film and a lamination glass member or the adhesivity between respective layers in the interlayer film can be further well controlled.

### (Other ingredients)

The thermoplastic resin layer may contain additives such as a light stabilizer, a flame retardant, an antistatic agent, a pigment, a dye, an adhesive force regulating agent, a moisture-resistance improving agent, a fluorescent brightening agent, and an infrared ray absorber, as necessary. One kind of these additives may be used alone, and two or more kinds thereof may be used in combination.

### (Conductive film)

In the interlayer film, it is preferred that a surface at a side opposite to the thermoplastic resin layer side of the conductive film be a surface on which a lamination glass member is layered.

The conductive film can be formed on the thermoplastic resin layer by a thin film forming technique such as sputtering and vapor deposition with the use of a conductive substance.

Examples of a conductive material include silver, gold, platinum, titanium, palladium, and the like. In the present invention, in order to enhance the transparency, the conductive film contains silver, gold, or platinum. In this case, the conductive film may contain two or more kinds of silver, gold, and platinum. The conductive film may contain silver, may contain gold, and may contain platinum. Moreover, in the conductive film, silver, gold, and platinum each may be alloyed with another metal. As a component of alloy, titanium, palladium, or the like may be used. It is preferred that the conductive film be a silver film, a silver alloy film, a gold film, a gold alloy film, a platinum film, or a platinum alloy film. The conductive film may be a silver film or a silver alloy film, may be a gold film or a gold alloy film, and may be a platinum film or a platinum alloy film. Moreover, the conductive film may be a stacked film containing silver, gold, or platinum. The silver film and the silver alloy film contain silver. The gold film and the gold alloy film contain gold. The platinum film and the platinum alloy film contain platinum. Moreover, the conductive film may be a multilayeredly constituted film with two or more layers as long as silver, gold, or platinum is contained in the film. For example, the conductive film may be a multilayeredly constituted film including a layer containing silver, gold, or platinum and a layer containing a conductive material other than silver, gold, or platinum. Moreover, when two conductive films are respectively arranged on both of a first surface of the thermoplastic resin layer and a second surface opposite to the first surface, the first conductive film needs only to contain silver, gold, or platinum, and the second conductive film does not need to contain silver, gold, or platinum.

The conductive film and a lamination glass member may be bonded together with the use of a compound having an adhesiveness which is interposed therebetween. Moreover, a conductive film portion may be partially provided on a surface of the thermoplastic resin layer to secure a portion where the thermoplastic resin layer and a lamination glass member are made to come into direct contact with each other.

### (Other details of interlayer film for laminated glass)

The distance between one end and the other end of the interlayer film is preferably 0.5 m or more, more preferably 0.8 m or more, and especially preferably 1 m or more and is preferably 3 m or less, more preferably 2 m or less, and especially preferably 1.5 m or less. When the interlayer film has a length direction and a width direction, the distance between one end and the other end thereof refers to a distance in the length direction of the interlayer film. When the interlayer film has a square planar shape, the distance between one end and the other end thereof refers to a distance between one end and the other end facing each other.

The thickness of the thermoplastic resin layer is not particularly limited. From the viewpoint of the practical aspect and the viewpoint of sufficiently enhancing the heat shielding properties, the thickness of the thermoplastic resin layer is preferably 0.1 mm or more and more preferably 0.25 mm or more and is preferably 3 mm or less and more preferably 1.5 mm or less. When the thickness of the thermoplastic resin layer is the lower limit or more, the penetration resistance of laminated glass is enhanced.

The thickness of the conductive film (the thickness of one layer of the conductive film) is 100 nm or less, preferably 80 nm or less, more preferably 50 nm or less, and further preferably 30 nm or less. When the thickness of the conductive film is the upper limit or less, it is easy to heighten the visible light transmittance of the interlayer film, and the visibility of laminated glass can be further enhanced. Furthermore, when the thickness of the conductive film is the upper limit or less, the adhesivity between the interlayer film and a lamination glass member is also further enhanced. Furthermore, when the thickness of the conductive film is the upper limit or less, the transparency of the interlayer film is also further enhanced.

In this connection, when two conductive films are respectively arranged on both of a first surface of the thermoplastic resin layer and a second surface opposite to the first surface, the total of the thickness of a first conductive film and the thickness of a second conductive film is 200 nm or less, preferably 160 nm or less, more preferably 100 nm or less, and further preferably 60 nm or less. When the total of the thickness of a first conductive film and the thickness of a second conductive film is the upper limit or less, it is easy to further heighten the visible light transmittance of the interlayer film, and the visibility of laminated glass can be still further enhanced. Furthermore, when the total of the thickness of a first conductive film and the thickness of a second conductive film is the upper limit or less, the adhesivity between the interlayer film and a lamination glass member is also still further enhanced. Furthermore, when the total of the thickness of a first conductive film and the thickness of a second conductive film is the upper limit or less, the transparency of the interlayer film is also further enhanced.

When the interlayer film for laminated glass according to the present invention is used, from the viewpoint of effectively making the interlayer film planarly generate heat at an even higher temperature, the thickness of the conductive film is preferably 10 nm or more and more preferably 50 nm or more. Similarly, when the interlayer film for laminated glass according to the present invention is used, from the viewpoint of effectively making the interlayer film planarly generate heat at an even higher temperature, the total of the thickness of a first conductive film and the thickness of a second conductive film is preferably 20 nm or more and more preferably 100 nm or more.

Moreover, when the conductive film is a multilayeredly constituted film with two or more layers, the thickness of at least one layer of a layer containing silver, gold, or platinum is preferably 95 nm or less, more preferably 80 nm or less, further preferably 50 nm or less, and especially preferably 30 nm or less. When the thickness of the layer containing silver, gold, or platinum is the upper limit or less, it is easy to heighten the visible light transmittance of the interlayer film, and the visibility of laminated glass can be further enhanced. Furthermore, when the thickness of the conductive film is the upper limit or less, the adhesivity between the interlayer film and a lamination glass member is also further enhanced.

Moreover, when the conductive film is a multilayeredly constituted film with two or more layers, from the viewpoint of effectively making the interlayer film for laminated glass according to the present invention planarly generate heat at an even higher temperature, the thickness of (at least one layer of) a layer containing silver, gold, or platinum is preferably 10 nm or more, more preferably 30 nm or more, and further preferably 50 nm or more.

The thickness of the conductive film refers to an average thickness of the whole conductive film. In this connection, when two conductive films are respectively arranged on both of a first surface of the thermoplastic resin layer and a second surface opposite to the first surface, the thicknesses of the two conductive films refer to an average thickness of the whole first conductive film and an average thickness of the whole second conductive film, respectively. In this connection, the thickness of a conductive film can be measured according to the following method. With the use of a focused ion beam apparatus XVision200TB available from Hitachi High-Tech Science Corporation, a conductive film is irradiated with a focused ion beam under the condition of an acceleration voltage of 5 keV to expose a cut surface of the conductive film. The exposed cut surface is observed with a TEM (JEM-2010F type field emission-type transmission electron microscope available from JEOL Ltd.) to obtain a picture image observed at 600,000 magnifications. With the use of a scale bar, five locations of the conductive film portion in the picture image are measured for the thickness to determine an averaged thickness value of five measured values. The same operation is performed at three locations in total of a middle portion in the width direction of the interlayer film and two positions respectively apart by 15 cm from both ends in the width direction, and an average of three averaged thickness values is defined as the thickness of the conductive film.

The method for producing the interlayer film is not particularly limited. As the method for producing the interlayer film, a conventionally known method can be used.

The method for kneading at the time of producing the interlayer film is not particularly limited. Examples of this method include a method using an extruder, a plastograph, a kneader, a Banbury mixer, a calender roll, or the like. A method using an extruder is preferred and a method using a twin-screw extruder is more preferred because the methods are suitable for continuous production.

The interlayer film may be an interlayer film with a uniform thickness and may be an interlayer film with a thickness varying. The sectional shape of the interlayer film may be a rectangular shape and may be a wedge shape.

### (Laminated glass)

The laminated glass according to the present invention is provided with a first lamination glass member, a second lamination glass member, and the above-described interlayer film. In the laminated glass according to the present invention, the interlayer film is sandwiched between the first lamination glass member and the second lamination glass member. It is preferred that the laminated glass be provided with an electricity supply unit for supplying the interlayer film with electricity. The electricity supply unit is connected to laminated glass. It is preferred that the electricity supply unit be connected to an interlayer film, and it is more preferred that the electricity supply unit be connected to a conductive film.

Fig. 3 is a sectional view schematically showing an example of laminated glass prepared with the interlayer film for laminated glass shown in Fig. 1.

The laminated glass 21 shown in Fig. 3 is provided with a first lamination glass member 31, a second lamination glass member 32, an electricity supply unit 33, and an interlayer film 1. The interlayer film 1 is arranged between the first lamination glass member 31 and the second lamination glass member 32 to be sandwiched therebetween.

The first lamination glass member 31 is layered on a first surface of the interlayer film 1. The second lamination glass member 32 is layered on a second surface opposite to the first surface of the interlayer film 1. The first lamination glass member 31 is layered on an outer surface of a conductive film 3X. The second lamination glass member 32 is layered on an outer surface of a conductive film 3Y.

In the laminated glass 21, the electricity supply unit 33 for supplying the interlayer film 1 with electricity is connected to the interlayer film 1. The electricity supply unit 33 is connected to the conductive film 3X and the conductive film 3Y of the interlayer film 1.

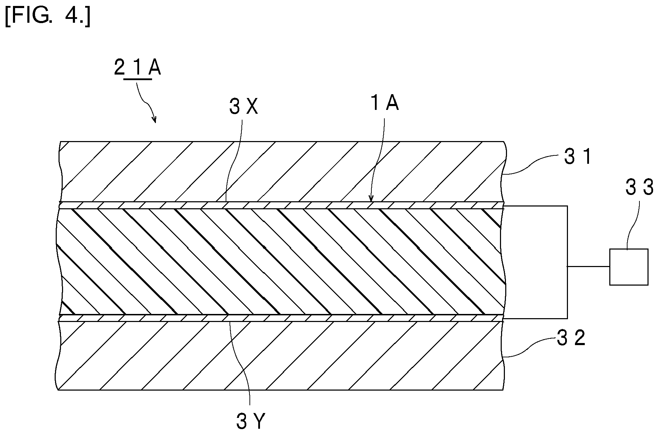

Fig. 4 is a sectional view schematically showing an example of laminated glass prepared with the interlayer film for laminated glass shown in Fig. 2.

The laminated glass 21A shown in Fig. 4 is provided with a first lamination glass member 31, a second lamination glass member 32, an electricity supply unit 33, and an interlayer film 1A. The interlayer film 1A is arranged between the first lamination glass member 31 and the second lamination glass member 32 to be sandwiched therebetween.

The first lamination glass member 31 is layered on a first surface of the interlayer film 1A. The second lamination glass member 32 is layered on a second surface opposite to the first surface of the interlayer film 1A. The first lamination glass member 31 is layered on an outer surface of a conductive film 3X. The second lamination glass member 32 is layered on an outer surface of a conductive film 3Y.

In the laminated glass 21A, the electricity supply unit 33 for supplying the interlayer film 1A with electricity is connected to the interlayer film 1A. The electricity supply unit 33 is connected to the interlayer film 1A, the conductive film 3X and the conductive film 3Y.

Laminated glass provided with an electricity supply unit may be incorporated into an automobile or a building. Laminated glass may not be provided with an electricity supply unit. For example, at the time of incorporating laminated glass into an automobile, a building, or the like, an electricity supply unit furnished to the automobile or the building and an interlayer film can be connected to constitute laminated glass provided with the electricity supply unit.

The visible light transmittance of the laminated glass is preferably 40% or more and more preferably 70% or more. When the visible light transmittance satisfies the lower limit, the visibility is further enhanced.

The haze value of the laminated glass is preferably 2.0% or less, more preferably 1.0% or less, and further preferably 0.5% or less. When the haze value satisfies the upper limit, the transparency is further enhanced.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. It is preferred that the glass plate be a sheet of glass other than a sheet of wired plate glass because the visibility of laminated glass can be further improved. The organic glass is synthetic resin glass substituted for inorganic glass. Examples of the sheet of organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more and is preferably 5 mm or less and more preferably 3 mm or less. Moreover, when the lamination glass member is a glass plate, the thickness of the glass plate is preferably 0.5 mm or more and more preferably 0.7 mm or more and is preferably 5 mm or less and more preferably 3 mm or less. When the lamination glass member is a PET film, the thickness of the PET film is preferably 0.03 mm or more and is preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag, so that the air remaining between the first and the second lamination glass members and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained. At the time of producing the laminated glass, a first layer, a second layer, and a third layer may be layered.

Each of the interlayer film and the laminated glass can be used for automobiles, railway vehicles, aircraft, ships, buildings, and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass, or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to the following examples.

### (Example 1)

One hundred parts by weight of "PVB1" (a polyvinyl butyral resin acetalized with n-butyraldehyde, the average polymerization degree of 1700, the content of the hydroxyl group of 30.5% by mole, the acetylation degree of 1% by mole, the butyralization degree of 68.5% by mole), 40 parts by weight of a plasticizer (3GO), 0.2 parts by weight of an ultraviolet ray screening agent (2-(2'-hydroxy-3'-t-butyl-5-methylphenyl)-5-chlorobenzotriazole, "Tinuvin 326" available from BASF Japan Ltd.), 0.2 parts by weight of an oxidation inhibitor (BHT), and a mixture of magnesium acetate and magnesium 2-ethylbutyrate in an amount that the total of the contents of Mg and K in the resulting interlayer film becomes 60 ppm were mixed and extruded by an extruder to obtain a single-layered thermoplastic resin layer with a thickness of 760 µm.

With the use of a sputtering apparatus, in an argon gas atmosphere, silver was deposited on an upper face (first surface) of the obtained thermoplastic resin layer to be formed into a silver film with a thickness of 50 nm, and thus, an interlayer film (conductive interlayer film) was obtained.

The obtained interlayer film was cut into a size of 10 cm in longitudinal length × 10 cm in transversal length. Next, two sheets of green glass (10 cm in longitudinal length × 10 cm in transversal length × 2 mm in thickness) in accordance with JIS R3208 were prepared. The obtained interlayer film was sandwiched between the two sheets of green glass and held in place and pressed under vacuum at 90°C for 30 minutes with a vacuum laminator to obtain a laminate. With regard to the laminate, interlayer film portions protruded from the glass plate were cut away to obtain a sheet of laminated glass.

### (Example 2)

A thermoplastic resin layer being the same as that in Example 1 was prepared. With the use of a sputtering apparatus, in an argon gas atmosphere, silver was deposited on an upper face (first surface) of the thermoplastic resin layer to be formed into a silver film with a thickness of 50 nm, and furthermore, with the use of a sputtering apparatus, in an argon gas atmosphere, tin-doped indium oxide (ITO) was deposited on the silver film to be formed into an ITO film with a thickness of 10 nm. In this way, as a conductive film, an Ag-ITO composite film being a stacked conductive film constituted of the silver film and the ITO film was formed on the upper face of the thermoplastic resin layer to obtain an interlayer film (conductive interlayer film).

A sheet of laminated glass was obtained in the same manner as that in Example 1 except that the obtained interlayer film was used.

### (Example 3)

A thermoplastic resin layer being the same as that in Example 1 was prepared. With the use of a sputtering apparatus, in an argon gas atmosphere, silver was deposited on an upper face (first surface) of the thermoplastic resin layer to be formed into a silver film with a thickness of 50 nm, furthermore, with the use of a sputtering apparatus, in an argon gas atmosphere, silver was deposited on a lower face (second surface) of the thermoplastic resin layer to be formed into a silver film with a thickness of 50 nm, and thus, an interlayer film (conductive interlayer film) was obtained.

A sheet of laminated glass was obtained in the same manner as that in Example 1 except that the obtained interlayer film was used.

### (Example 4)

An interlayer film (conductive interlayer film) and a sheet of laminated glass were obtained in the same manner as that in Example 1 except that the thickness of the silver film was changed to 23 nm.

### (Example 5)

An interlayer film (conductive interlayer film) and a sheet of laminated glass were obtained in the same manner as that in Example 1 except that the thickness of the silver film was changed to 100 nm.

### (Example 6)

An interlayer film (conductive interlayer film) and a sheet of laminated glass were obtained in the same manner as that in Example 1 except that gold was used in the sputtering in place of silver.

### (Example 7)

An interlayer film (conductive interlayer film) and a sheet of laminated glass were obtained in the same manner as that in Example 3 except that gold was used in the sputtering in place of silver.

### (Comparative Example 1)

A sheet of laminated glass was obtained in the same manner as that in Example 1 except that copper was used in the sputtering in place of silver to form a copper film as a conductive film in place of the silver film.

### (Comparative Example 2)

A sheet of laminated glass was obtained in the same manner as that in Example 2 except that copper was used in the sputtering in place of silver to form a copper film in place of the silver film in the conductive film.

### (Comparative Example 3)

A sheet of laminated glass was obtained in the same manner as that in Example 3 except that copper was used in the sputtering in place of silver to respectively form two copper films as conductive films in place of the two silver films.

### (Comparative Example 4)

A sheet of laminated glass was obtained in the same manner as that in Example 1 except that tin-doped indium oxide (ITO) was used in the sputtering in place of silver to form a tin-doped indium oxide (ITO) film as a conductive film in place of the silver film.

### (Comparative Example 5)

A sheet of laminated glass was obtained in the same manner as that in Example 3 except that tin-doped indium oxide (ITO) was used in the sputtering in place of silver to respectively form two tin-doped indium oxide (ITO) films as conductive films in place of the two silver films.

### (Comparative Example 6)

A thermoplastic resin layer being the same as that obtained in Example 1 was prepared. No conductive film was formed on the surface of this thermoplastic resin layer. Plural heating wires were arranged on a first surface of this thermoplastic resin layer to obtain an interlayer film having a heating wire.

A sheet of laminated glass was obtained in the same manner as that in Example 1 except that the obtained interlayer film was used. In this connection, in the sheet of laminated glass obtained, the heating wires were arranged on the surface of a center part of the interlayer film, and no heating wire was arranged on the position at an inner side by 1 cm from the end part.

### (Comparative Example 7)

An interlayer film (conductive interlayer film) and a sheet of laminated glass were obtained in the same manner as that in Example 1 except that the thickness of the silver film was changed to 120 nm.

### (Comparative Example 8)

An interlayer film (conductive interlayer film) and a sheet of laminated glass were obtained in the same manner as that in Example 6 except that the thickness of the gold film was changed to 120 nm.

### (Evaluation)

### (1) Measurement of surface resistivity

With the use of a four-probe method resistivity meter Loresta-AX (available from Mitsubishi Chemical Analytech Co., Ltd.), the obtained interlayer film was measured for the surface resistivity in accordance with JIS K7194.

### (2) Measurement of visible light transmittance (A light Y value, initial A-Y (380 to 780 nm)), and evaluation of appearance

With the use of a spectrophotometer ("U-4100" available from Hitachi High-Technologies Corporation), the sheet of laminated glass obtained was measured for the visible light transmittance in the wavelength of 380 to 780 nm in accordance with JIS R3211 (1998).

Moreover, on the basis of the visible light transmittance, the appearance was judged according to the following criteria. A sheet of laminated glass is judged to be excellent in visibility through laminated glass when the visible light transmittance is 40% or more and is less than 70% and is judged to be considerably excellent in visibility through laminated glass when the visible light transmittance is 70% or more. In this connection, in a sheet of laminated glass prepared with an interlayer film having a heating wire, when the heating wire is confirmed and the sheet is low in visibility through laminated glass, the sheet is judged to be "×" as a criterion for the appearance.

### [Criteria for judgment in appearance]

○: The visible light transmittance is 70% or more.
Δ: The visible light transmittance is 40% or more and is less than 70%.
×: The visible light transmittance is less than 40%, or the heating wire is confirmed.

### (3) Measurement of haze value, and evaluation of transparency

The sheet of laminated glass obtained was measured for the haze value in accordance with JIS K6714 using a haze meter ("TC-H III DPK" available from Tokyo Denshoku Co., Ltd.). On the basis of the haze value, the transparency was judged according to the following criteria. In this connection, in a sheet of laminated glass having a heating wire, a portion where there is no heating wire was measured for the haze value. In this connection, in a sheet of laminated glass prepared with an interlayer film having a heating wire, the sheet was determined to be low in visibility through laminated glass because the heating wire was confirmed. In a sheet of laminated glass prepared with an interlayer film having a heating wire, the sheet was judged to be "×" as a criterion for the transparency judged on the basis of the haze value since the heating wire is confirmed and the sheet is low in visibility through laminated glass.

### [Criteria for judgment in transparency]

○: The haze value is 2.0% or less.
×: The haze value is more than 2.0%, or the heating wire is confirmed.

### (4) Heat-generating performance (end-point temperature by heat generation, and planar heat-generating property and high-temperature heat-generating property)

The obtained interlayer film was cut into a size of 10 cm in longitudinal length × 10 cm in transversal length. Next, two sheets of green glass (10 cm in longitudinal length × 10 cm in transversal length × 2 mm in thickness) in accordance with JIS R3208 were prepared. To both ends of the sheet of green glass, two single-sided copper foil tapes STS-CU42S (available from Sekisui Material Solutions Co., Ltd.) as electrodes were respectively bonded. On this occasion, two copper foil tapes were respectively bonded to both ends of the respective two sheets of green glass when the interlayer film has two conductive films respectively on both of the first surface and the second surface, and two copper foil tapes were respectively bonded to both ends of only a sheet of green glass brought into contact with the conductive film when the interlayer film has a conductive film only on the first surface. Moreover, on this occasion, the respective copper foil tapes were bonded thereto so that copper foil tape portions for power source connection are protruded from the sheet of green glass. The obtained interlayer film was sandwiched between the two sheets of green glass so that each conductive film is brought into contact with the copper foil tape of the sheet of green glass and held in place and pressed under vacuum at 90°C for 30 minutes with a vacuum laminator to obtain a laminate. With regard to the laminate, while attention was paid so as not to cause the copper foil tape for power source connection to be cut, interlayer film portions protruded from the glass plate were cut away to obtain a sheet of laminated glass. By the use of a cable with alligator clips, a DC 12 V/4.2 A power source S8JX-N05012DC (available from OMRON Corporation) was connected to the electrode of the sheet of laminated glass obtained.

The laminated glass at 25°C was applied with an output voltage of 12 V for 7 minutes. With the use of a contact thermometer, the center part of the laminated glass surface was measured for the end-point temperature by heat generation (surface temperature) at the end of 7 minutes after the initiation of voltage application. Furthermore, a surface temperature difference between the vicinity of an end part (the position at an inner side by 1 cm from the end part) of laminated glass and the center part thereof was measured. The planar heat-generating property and the high-temperature heat-generating property were judged according to the following criteria.

### [Criteria for judgment in planar heat-generating property and high-temperature heat-generating property]

○: The temperature is uniformly increased within the region extending from the vicinity of an end part of laminated glass to the center part thereof (the temperature difference between the vicinity of an end part and the center part is 4°C or less after the temperature is increased).
×: The temperature fails to be increased, or the temperature fails to be uniformly increased within the region extending from the end part of laminated glass to the center part thereof (the temperature difference between the vicinity of an end part and the center part is more than 4°C after the temperature is increased).

The adhesivity of an interlayer film for laminated glass to a glass plate was judged according to the following criteria.

### [Evaluation criteria for judgment in adhesivity]

○: Adhesion between the interlayer film and the glass plate is attained uniformly over the whole face, and the sheet is in a state where no air bubble is observed at an adhering part between the interlayer film and the glass plate.
Δ: The sheet is in a state where an air bubble with a diameter of 2 mm or less is observed at an adhering part between the interlayer film and the glass plate.
×: The sheet is in a state where an air bubble with a diameter of larger than 2 mm is observed at an adhering part between the interlayer film and the glass plate.

The results are shown in Tables 1, 2.

**[Table 1]**

| | | Example 1 | Example 2 | Example 3 | Example 4 | Example 5 | Example 6 | Example 7 |
|---|---|---|---|---|---|---|---|---|
| Constitution of interlayer film | | Silver film/ Thermoplastic resin layer | ITO film/ Silver film/ Thermoplastic resin layer | Silver film/ Thermoplastic resin layer/ Silver film | Silver film/ Thermoplastic resin layer | Silver film/ Thermoplastic resin layer | Gold film/ Thermoplastic resin layer | Gold film/ Thermoplastic resin layer/ Gold film |
| Thickness of first conductive film | Kind and thickness of conductive material 1 | Silver 50 nm | ITO 10 nm | Silver 50 nm | Silver 23 nm | Silver 100 nm | Gold 50 nm | Gold 50 nm |
| | Kind and thickness of conductive material 2 | - | Silver 50 nm | - | - | - | - | - |
| | Total thickness | 50 nm | 60 nm | 50 nm | 23 nm | 100 nm | 50 nm | 50 nm |
| Thickness of second conductive film | Kind and thickness of conductive material 3 | - | - | Silver 50 nm | - | - | - | Gold 50 nm |
| | Kind and thickness of conductive material 4 | - | - | - | - | - | - | - |
| | Total thickness | - | - | 50 nm | - | - | - | 50 nm |
| Surface resistivity [Ω/D] | | 3.1 | 3.0 | 2.7 | 11.0 | 1.5 | 7.5 | 4.3 |
| Visible light transmittance [%] | | 75 | 72 | 70 | 85 | 40 | 50 | 40 |
| Transparency | | ○ | ○ | ○ | ○ | ○ | ○ | ○ |
| Judgment in appearance | | ○ | ○ | ○ | ○ | Δ | Δ | Δ |
| Adhesivity to glass | | ○ | ○ | ○ | ○ | ○ | ○ | ○ |
| Heat-generating performance | End-point temperature by heat generation [°C] | 58 | 60 | 62 | 50 | 85 | 52 | 57 |
| | Judgment in planar heat-generating property and high-temperature heat-generating property | ○ | ○ | ○ | ○ | ○ | ○ | ○ |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Constitution of interlayer film | | Copper film/ Thermoplastic resin layer | ITO film/ Copper film/ Thermoplastic resin layer | Copper film/ Thermoplastic resin layer/ Copper film | ITO film/ Thermoplastic resin layer | ITO film/ Thermoplastic resin layer/ ITO film | Heating wire/ Thermoplastic resin layer | Silver film/ Thermoplastic resin layer | Gold film/ Thermoplastic resin layer |
| Thickness of first conductive film | Kind and thickness of conductive material 1 | Copper 50 nm | ITO 10 nm | Copper 50 nm | ITO 50 nm | ITO 50 nm | Heating wire | Silver 120 nm | Gold 120 nm |
| | Kind and thickness of conductive material 2 | - | Copper 50 nm | - | - | - | - | - | - |
| | Total thickness | 50 nm | 60 nm | 50 nm | 50 nm | 50 nm | - | 120 nm | 120 nm |
| Thickness of second conductive film | Kind and thickness of conductive material 3 | - | - | Copper 50 nm | - | ITO 50nm | - | - | - |
| | Kind and thickness of conductive material 4 | - | - | - | - | - | - | - | - |
| | Total thickness | - | - | 50 nm | - | 50 nm | - | - | - |
| Surface resistivity [Ω/D] | | 1.1 | 1.1 | 1.1 | 80 | 78 | - | 1.1 | 2.2 |
| Visible light transmittance [%] | | 1 | 1 | 1 | 88 | 82 | 88 | 36 | 30 |
| Transparency | | × | × | × | ○ | ○ | × (The heating wire is confirmed) | × | × |
| Judgment in appearance | | ○ | ○ | ○ | ○ | ○ | × (The heating wire is confirmed) | × | × |
| Adhesivity to glass | | ○ | ○ | ○ | ○ | ○ | ○ | Δ | Δ |
| Heat-generating performance | End-point temperature by heat generation [°C] | 60 | 60 | 60 | 25 | 25 | 80 | 95 | 60 |
| | Judgment in planar heat-generating property and high-temperature heat-generating property | ○ | ○ | ○ | × | × | × | ○ | ○ |

### EXPLANATION OF SYMBOLS

- 1, 1A:: Interlayer film
- 2, 2A:: Thermoplastic resin layer
- 3X, 3Y:: Conductive film
- 11:: First layer
- 12:: Second layer
- 13:: Third layer
- 21,: 21A: Laminated glass
- 31:: First lamination glass member
- 32:: Second lamination glass member
- 33:: Electricity supply unit

## Claims

1. An interlayer film for laminated glass, having a thermoplastic resin layer containing a thermoplastic resin, and
a conductive film being arranged on a first surface of the thermoplastic resin layer or two conductive films being respectively arranged on both of the first surface and a second surface opposite to the first surface,
a surface at a side opposite to the thermoplastic resin layer side of the conductive film being a surface on which a lamination glass member is layered,
the conductive film containing silver, gold, or platinum,
the conductive film having a thickness of 100 nm or less, and
the interlayer film being capable of planarly generating heat by being supplied with electricity.

2. The interlayer film for laminated glass according to claim 1, wherein, when the interlayer film is sandwiched between two sheets of green glass with a thickness of 2 mm in accordance with JIS R3208 to obtain laminated glass, the visible light transmittance of the laminated glass is 40% or more.

3. The interlayer film for laminated glass according to claim 1 or 2, wherein, when the interlayer film is sandwiched between two sheets of green glass with a thickness of 2 mm in accordance with JIS R3208 to obtain laminated glass, the haze value of the laminated glass is 2.0% or less.

4. The interlayer film for laminated glass according to any one of claims 1 to 3, wherein the surface resistivity measured at a portion in which the conductive film is arranged is 15 Ω/D or less.

5. The interlayer film for laminated glass according to any one of claims 1 to 4, wherein the thermoplastic resin is a polyvinyl acetal resin.

6. The interlayer film for laminated glass according to any one of claims 1 to 5, wherein the thermoplastic resin layer contains a plasticizer.

7. The interlayer film for laminated glass according to any one of claims 1 to 6, wherein the thermoplastic resin layer contains an ultraviolet ray screening agent.

8. The interlayer film for laminated glass according to any one of claims 1 to 7, wherein the thermoplastic resin layer contains an alkali metal salt or an alkaline earth metal salt.

9. The interlayer film for laminated glass according to any one of claims 1 to 8, being supplied with electricity to be used.

10. Laminated glass, comprising:
a first lamination glass member;
a second lamination glass member; and
the interlayer film for laminated glass according to any one of claims 1 to 9,
the interlayer film for laminated glass being arranged between the first lamination glass member and the second lamination glass member.

11. The laminated glass according to claim 10, further comprising an electricity supply unit for supplying the interlayer film for laminated glass with electricity.

12. Laminated glass, comprising:
a first lamination glass member;
a second lamination glass member;
an interlayer film for laminated glass; and
an electricity supply unit for supplying the interlayer film for laminated glass with electricity,
the interlayer film for laminated glass being arranged between the first lamination glass member and the second lamination glass member,
the interlayer film for laminated glass having a thermoplastic resin layer containing a thermoplastic resin and a conductive film being arranged on a first surface of the thermoplastic resin layer or two conductive films being respectively arranged on both of the first surface and a second surface opposite to the first surface,
the conductive film containing silver, gold, or platinum,
the conductive film having a thickness of 100 nm or less, and
the laminated glass being capable of planarly generating heat by supplying the interlayer film for laminated glass with electricity from the electricity supply unit.

13. The laminated glass according to any one of claims 10 to 12, wherein the visible light transmittance is 40% or more.

14. The laminated glass according to any one of claims 10 to 13, wherein the haze value is 2.0% or less.
